# FASCICULE DE BREVET EUROPEEN

(11) **EP 3 924 606 B1**
(45) Date de publication et mention de la délivrance du brevet: **15.02.2023**
(21) Numéro de dépôt: 20726190.0
(22) Date de dépôt: 13.03.2020
(51) Int. Cl.: F01M 11/04, F01M 11/12, B64F 5/40, F01D 25/18, F02C 7/06, F01D 25/20, F01M 11/06, F16N 19/00

(54) **DISPOSITIF ET PROCÉDÉ DE REMPLISSAGE D'UN RESERVOIR D'HUILE D'UN MOTEUR D'AERONEF**
VORRICHTUNG UND VERFAHREN ZUM BEFÜLLEN EINES ÖLRESERVOIRS EINES FLUGZEUGTRIEBWERKS
DEVICE AND METHOD FOR FILLING AN OIL RESERVOIR OF AN AIRCRAFT ENGINE

(30) Priorité: 03.04.2019 FR 1903583
(43) Date de publication de la demande: 22.12.2021
(73) Titulaire: SAFRAN AIRCRAFT ENGINES, 75015 Paris (FR)
(72) Inventeur: SANTIN, Mathieu, Jean, Jacques, 77550 MOISSY-CRAMAYEL (FR); DUPAYS, Clément, 77550 MOISSY-CRAMAYEL (FR); WAISSI, Bellal, 77550 MOISSY-CRAMAYEL (FR)
(74) Mandataire: Brevalex
(86) Numéro de dépôt international: PCT/FR2020/050532
(87) Numéro de publication internationale: WO 2020/201651

(56) Documents cités:
- FR-A- 899 615
- FR-A1- 3 020 093
- US-A- 4 024 887
- US-A1- 2010 230 003
- US-A1- 2014 007 675

## Description

L'invention présente a trait à un dispositif et un procédé de remplissage d'un réservoir d'huile de moteur d'aéronef.

Certains avions comportent un dispositif permettant l'alimentation à distance de réservoirs d'huile adjacents aux moteurs et assurant leur lubrification. L'huile est généralement originaire d'un second réservoir situé ailleurs dans l'avion et généralement commun à tous les moteurs. L'avantage de cette disposition est qu'elle évite le remplissage manuel des réservoirs de moteur, qui sont peu accessibles. Les dispositifs de remplissage comprennent d'une part un conduit d'alimentation reliant le second réservoir ou réservoir d'avion aux réservoirs de moteur, une pompe placée sur le conduit, et un moyen de commande du fonctionnement de la pompe par un mode automatique ou non. La commande peut être continue ou exprimée par un nombre entier d'impulsions, à chacune desquelles une dose d'huile déterminée est délivrée au réservoir.

Il convient de remplir les réservoirs à un niveau aussi précis que possible et correspondant à un remplissage optimal, les sous-remplissages entraînant une diminution de la durée de fonctionnement possible du moteur et les sur-remplissages étant interdits par la réglementation, puisqu'ils conduisent à restreindre le volume supérieur libre, destiné à l'aération du réservoir et à l'expansion de l'huile.

On utilise couramment, dans ce domaine technique, des sondes de niveau d'huile dans le réservoir à remplir afin d'évaluer non seulement une hauteur de remplissage, mais un volume d'huile à fournir pendant le remplissage, en se fondant sur la hauteur d'huile quand le remplissage est décidé. De telles sondes sont conçues pour mesurer le niveau d'huile à toute hauteur et à tout instant dans les réservoirs qui les contiennent. Le document WO 2019/122658 A1 décrit une telle sonde de niveau d'huile. Ces avantages, par rapport à des dispositifs plus simples utilisés dans l'art antérieur pour piloter un remplissage et éventuellement éviter un sur-remplissage, peuvent être expliqués en comparaison à d'autres documents. US 2014/007675 A1 décrit un dispositif de remplissage dont les mesures sont effectuées par deux sondes pénétrant dans le réservoir et dotées chacune d'une résistance électrique apte à indiquer si elles sont immergées ou non dans l'huile, d'après l'échauffement qu'elles subissent quand un courant électrique les parcourt. Avec un tel dispositif, la résistance inférieure est placée au niveau de sous-remplissage, et la résistance supérieure au niveau de sur-remplissage. Les remplissages sont entrepris au plus tard quand le niveau d'huile atteint la résistance inférieure, et poursuivis jusqu'à ce qu'ils montent jusqu'à la résistance supérieure. Comme ce dispositif n'indique pas la quantité d'huile qui doit être fournie à chaque remplissage, celui-ci doit être suffisamment lent pour ne pas dépasser, par l'inertie du système, le niveau de la résistance supérieure. Et surtout, les capteurs fondés sur des résistances sont sujets à des avaries et des pannes de divers genres, qu'on retrouvera d'ailleurs dans les sondes typiquement utilisées pour l'invention.

On peut encore citer le document US 4024887 A qui décrit un dispositif de coupure d'alimentation d'huile, fermant une vanne d'arrêt située sur le conduit d'alimentation en huile menant au réservoir, dès que l'huile présente dans ce dernier a atteint le dispositif de coupure. Une certaine lenteur de remplissage peut ici aussi être conseillée pour éviter d'atteindre rapidement et de franchir le seuil supérieur du niveau d'huile.

Or, les sondes de niveau d'huile, utilisées à titre principal dans l'invention, généralement composées d'interrupteurs électriques étagés à des hauteurs différentes du réservoir et d'un flotteur magnétique à la surface libre de l'huile, apte à fermer certains de ces interrupteurs, sont soumises à des imprécisions assez importantes, ainsi qu'à des avaries qui peuvent être dues à des vieillissements produits par des cycles thermiques, mécaniques, des vibrations, de la fatigue ou de l'altération chimique, et dont certains effets peuvent être des dommages à des connexions électriques, l'apparition de résistances supplémentaires, ou le blocage, ou le court-circuit de certains des interrupteurs, voire le blocage du flotteur magnétique. On est donc conduit en pratique, afin d'éviter les sur-remplissages interdits, à accepter des sous-remplissages d'après des incertitudes de mesure attribuées à la sonde, mais qui peuvent atteindre des valeurs relativement importantes en pratique, d'un demi-litre par exemple, correspondant à plusieurs heures d'autonomie du moteur.

L'objet de l'invention est de s'affranchir de ces incertitudes de mesures de la sonde et de leurs conséquences sur la qualité du remplissage du réservoir, au moyen d'un dispositif perfectionné, qui garantit en principe le remplissage à un niveau optimal, et sans risque de le dépasser malgré les incertitudes inhérentes aux sondes de niveau.

Sous une forme générale, l'invention concerne ainsi un dispositif de remplissage d'un réservoir d'huile de moteur d'aéronef, comprenant un conduit d'alimentation menant au réservoir, une pompe placée sur le conduit d'alimentation, un module de traitement de remplissage, relié à une sonde d'un niveau d'huile dans le réservoir et donnant des indications de hauteur dudit niveau d'huile, caractérisé en ce que le conduit d'alimentation comprend une vanne d'arrêt de remplissage située entre la pompe et le réservoir, un dispositif de fermeture de la vanne d'arrêt, indépendant de la sonde et du module de traitement, sensible à une élévation de l'huile à un niveau de remplissage optimal du réservoir, et le module de traitement comprend un indicateur de sur-remplissage du réservoir et un indicateur de remplissage nominal du réservoir, lesdits indicateurs étant commandés quand l'huile atteint respectivement un niveau de sur-remplissage au-dessus du niveau de remplissage optimal et un niveau de remplissage nominal au-dessous du niveau de remplissage optimal, et le niveau de remplissage optimal est distant du niveau de remplissage nominal et du niveau de sur-remplissage de dénivellations correspondant toutes deux à une incertitude de mesure attribuée à la sonde.

Les incertitudes dont il est ici question sont des incertitudes jugées inhérentes à la sonde et correspondent en réalité en des tolérances. L'incertitude réelle des mesures de la sonde peut être plus grande en cas de dérive de son fonctionnement ; l'invention restera alors utile pour détecter de tels dysfonctionnements.

La vanne d'arrêt est conçue pour interrompre l'alimentation d'huile dès que le niveau de remplissage optimal est atteint. Les deux indicateurs permettent, en combinaison avec la vanne, de vérifier immédiatement que le niveau optimal a bien été atteint, sans être dépassé ou en étant légèrement dépassé, sans atteinte un sur-remplissage, à la fin du remplissage. Il sera alors inutile de procéder à une vérification visuelle, fastidieuse, du niveau d'huile dans le réservoir de moteur mal accessible. Il résulte de cela que la collaboration de la sonde et de la vanne d'arrêt conforme à l'invention pour le remplissage permet de constater un dysfonctionnement de l'une ou de l'autre si un résultat anormal est donné par les deux indicateurs, quelle que soit la nature du dysfonctionnement (panne de la vanne ou mesures incorrectes de la sonde).

On peut aussi souligner que l'invention repose sur la combinaison d'une sonde de niveau d'huile, d'un dispositif de coupure et des indicateurs de remplissage pour garantir soit un remplissage optimal si le système fonctionne correctement, soit une détection sûre d'un défaut du système dans le cas contraire. La sonde de niveau considéré dans l'invention indique à tout instant le niveau d'huile restant dans le réservoir et permet donc de déduire un volume de remplissage à fournir, en acceptant cependant une incertitude importante. Le dispositif de coupure garantit le remplissage jusqu'au niveau optimal et peut donc corriger l'incertitude inhérente à la sonde, sauf en cas d'avarie ou de panne de ce dispositif, qu'il est cependant impossible de détecter directement ; mais un ajustement judicieux du volume d'huile à fournir permet de pallier ces insuffisances, grâce aux indications des indicateurs.

D'après certaines réalisations préférées et optionnelles de l'invention :
- le module de traitement comprend un afficheur de quantité d'huile à fournir au réservoir, d'après des mesures de la sonde ; l'alimentation peut alors être déclenchée manuellement par un opérateur, d'autant plus facilement si elle est convertie en nombre d'impulsions de remplissage, délivrant chacune une quantité d'huile connue ;
- le conduit d'alimentation comprend une dérivation autour de la pompe, équipée d'un clapet autorisant seulement une circulation inverse à une circulation d'alimentation produite par la pompe vers le réservoir; si l'alimentation est poursuivie après la fermeture de la vanne d'arrêt, elle devient alors une simple recirculation d'huile autour de la pompe, passant par la dérivation et revenant en amont de la pompe, ce qui permet de continuer sans crainte le pompage de l'huile pendant toute la durée prévue au départ, même si cette durée a été surestimée.

D'autres réalisations préférées et optionnelles concernent la vanne d'arrêt et ses moyens de collaboration avec le reste du dispositif :
- le dispositif de la vanne d'arrêt comprend un conduit d'air se branchant au réservoir par un orifice de débouché obturable par l'huile et, à une extrémité opposée, se branchant à une prise de pression inférieure à une pression dans le réservoir, le conduit d'air passant par une première chambre de commande de la vanne d'arrêt, et la vanne d'arrêt contient un obturateur du conduit d'alimentation, déplacé par une pression dans la première chambre de commande entre une position d'ouverture du conduit d'alimentation quand la pression dans la première chambre de commande est exposée à la pression dans le réservoir et une position de fermeture du conduit d'alimentation quand la pression dans la première chambre de commande est exposée à ladite pression inférieure ;
- ladite extrémité opposée du conduit d'air se branche à une portion en venturi du conduit d'alimentation située entre la pompe et la vanne d'arrêt ;
- le conduit d'air passe aussi par l'obturateur de la vanne d'arrêt, et est coupé par l'obturateur quand celui-ci est à la position de fermeture ;
- la vanne d'arrêt comprend un ressort rappelant l'obturateur à la position d'ouverture ;
- la vanne d'arrêt comprend une seconde chambre de commande, opposée à ladite première chambre de commande par rapport à l'obturateur, et reliée au conduit d'alimentation entre la pompe et la vanne d'arrêt par un conduit de prise de pression.

Ces moyens supplémentaires permettent tous la construction d'une vanne d'arrêt simple, mais au fonctionnement fiable.

Un autre aspect de l'invention est un procédé de remplissage d'un réservoir d'huile équipé d'un dispositif de remplissage selon ce qui précède, consistant à déterminer une quantité d'huile à délivrer au réservoir d'après une mesure de niveau d'huile initial donnée par la sonde, à délivrer ladite quantité, caractérisé en ce qu'il comprend une vérification du remplissage et du dispositif, faite d'après les indicateurs.

L'avantage de l'invention est plus apparent si ladite vérification est faite exclusivement d'après des moyens visuels de vérification appartenant au dispositif et comprenant lesdits indicateurs, car la faculté de se passer de vérification visuelle du remplissage est obtenue avec un dispositif particulièrement simple.

Avantageusement, la quantité d'huile effectivement délivrée correspond à une quantité évaluée pour atteindre avec certitude le niveau de remplissage optimal, et comprenant une quantité théoriquement nécessaire pour atteindre ledit niveau de remplissage optimal à partir de la mesure de niveau d'huile initial, majorée d'une quantité fixe fonction d'une incertitude de mesure attribuée à la pompe et correspondant à une dénivellation égale à deux fois l'incertitude de la sonde ; et de façon encore plus avantageuse, la quantité d'huile à délivrer correspond à une quantité évaluée pour atteindre avec certitude le niveau de sur-remplissage en cas d'avarie du dispositif de fermeture de la vanne et correspondant à une dénivellation égale à quatre fois l'incertitude de la sonde.

Le procédé comprend encore avantageusement un arrêt automatique de la pompe quand soit la vanne d'arrêt est détectée comme fermée, soit le niveau de sur-remplissage est atteint.

Enfin, un autre aspect de l'invention est un aéronef comprenant au moins un dispositif selon ce qui précède, dans lequel le réservoir d'huile est un réservoir de moteur, et la conduite d'alimentation est originaire d'un autre réservoir d'huile présent dans une carlingue de l'aéronef, selon l'application principalement envisagée pour l'invention.

Pour récapituler certains aspects possibles de l'invention :
- le réservoir d'avion est disposé dans l'aéronef à distance du moteur ;
- l'obturateur est déplacé à la position de fermeture du conduit d'alimentation quand la pression dans la première chambre de commande est exposée seulement à la pression, inférieure à la pression dans le réservoir, à l'extrémité du conduit d'air opposée au réservoir ;
- le dispositif comprend un module de commande automatique de la pompe d'après des indications du module de traitement; un capteur détectant des fermetures de la vanne d'arrêt et un indicateur desdites fermetures détectées par le capteur; un module de traitement du capteur, renseigné par le capteur pour arrêter la pompe quand les fermetures de la vanne d'arrêt ont été détectées ;
- la quantité d'huile à délivrer correspond à une quantité évaluée pour atteindre avec certitude le niveau de remplissage optimal, et comprenant une quantité théoriquement nécessaire pour atteindre ledit niveau de remplissage optimal à partir de la mesure de niveau d'huile initial, majorée d'une quantité fixe fonction d'une incertitude de mesure attribuée à la pompe.

Ces différents aspects, caractéristiques et avantages de l'invention, ainsi que d'autres, apparaîtront mieux maintenant au commentaire détaillé des figures suivantes, relatives à certaines réalisations préférées et purement illustratives de l'invention, et donc non exclusives d'autres réalisations :
Fig. 1 représente un dispositif connu de remplissage d'un réservoir d'huile pour moteur d'avion ;
Fig. 2 illustre le réservoir central destiné à alimenter le réservoir de moteur ;
Fig. 3 représente un dispositif complet où le réservoir central dessert plusieurs réservoirs de moteur ;
Fig. 4 représente schématiquement le remplissage d'un réservoir de moteur ;
Fig. 5 illustre un mode de réalisation de l'invention ;
Fig. 6 illustre la vanne d'arrêt à un état ouvert ;
Fig. 7 la vanne d'arrêt à un état fermé ;
Fig. 8 est un diagramme illustrant le remplissage d'un réservoir d'avion ;
Fig. 9 un diagramme analogue illustrant une défaillance de sonde ;
Fig. 10 un diagramme analogue illustrant une autre défaillance de sonde ;
Fig. 11 un deuxième mode de réalisation de l'invention ;
Fig. 12 une variante de réalisation de ce deuxième mode ; et
Fig. 13 un troisième mode de réalisation de l'invention.

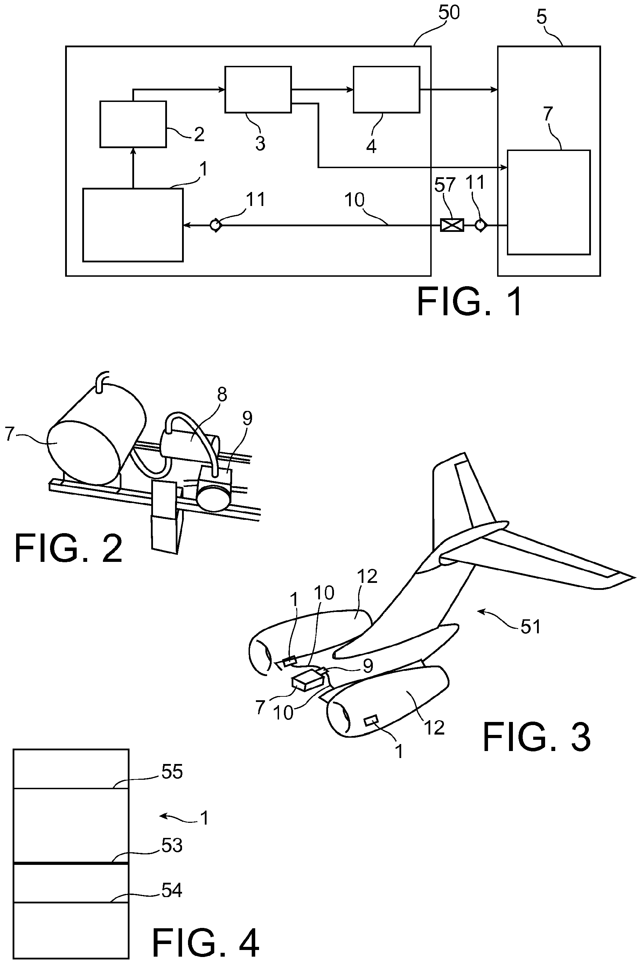

La figure 1 illustre schématiquement un dispositif connu. Un réservoir de moteur 1 est muni d'une sonde 2 de niveau d'huile, qui communique ses mesures à une unité d'acquisition 3. Quand cette dernière juge le niveau d'huile insuffisant, elle envoie un signal à une unité de demande de correction 4 qui fait intervenir un système d'alimentation 5. Le système d'alimentation 5 comprend un réservoir d'avion 7 (figure 2) muni d'une pompe 8 électrique et, en aval de celle-ci, une vanne de commutation 9 par laquelle le réservoir d'avion 7 peut alimenter le réservoir de moteur 1 en huile en ouvrant un conduit d'alimentation 10 qui les relie, cette conduite d'alimentation 10 étant munie de clapets anti-retour 11 aux bornes des réservoirs 1 et 7. Comme le montre la figure 3, un réservoir de moteur 1 est présent sur chacun des moteurs 12 d'un avion 51 représenté seulement partiellement et desservi par un conduit d'alimentation 10 particulier, et la vanne de commutation 9 permet de choisir tour à tour celui des conduits d'alimentation 10 à ouvrir et celui des réservoirs de moteur 1 à alimenter. Le système d'alimentation 5 commun aux différents moteurs 12 et réservoirs de moteur 1 est placé dans la carlingue de l'avion 51. Le réservoir d'avion 7 est en général muni d'une jauge visuelle de niveau d'huile. La vérification de son remplissage se fait au cours d'entretiens entre vols successifs. Quand le remplissage est effectué et que la sonde 2 indique un niveau suffisant, l'unité d'acquisition 3 l'indique au système d'alimentation 5, qui interrompt le fonctionnement de la pompe 8. En variante, les commandes peuvent être effectuées par l'intermédiaire d'un opérateur. Le réservoir de moteur 1, la sonde 2, l'unité d'acquisition 3 et l'unité de commande de correction 4 peuvent être éloignés les uns des autres dans l'avion 51, même si l'unité d'acquisition 3 et l'unité de commande de correction 4 peuvent soit être disposées sur le moteur et alors former un ensemble matériel unitaire 50, soit être situées dans le fuselage de l'avion, ou être unies en un seul calculateur. Les communications peuvent être faites par fil, de façon analogique ou numérique, par exemple à l'aide d'un bus de données de type ARINC.

La figure 4 schématise la nécessité de maintenir un niveau 53 d'huile entre une limite inférieure 54 et une limite supérieure 55 à l'intérieur de chaque réservoir de moteur 1, afin d'éviter à la fois un défaut de lubrification dans le moteur 12 et un remplissage excessif; le sommet du réservoir 1 est un volume d'aération et d'expansion de l'huile qui doit rester libre. Des dérives de la sonde 2 qui aboutiraient soit à surestimer soit à sous-estimer la quantité d'huile et la hauteur du niveau 53 doivent donc être toutes deux évitées. L'objectif d'un remplissage est de ramener le niveau d'huile 53 à la limite supérieure 55 par un procédé pouvant être manuel, ou automatisé au contraire.

On passe maintenant au commentaire de certaines réalisations de l'invention.

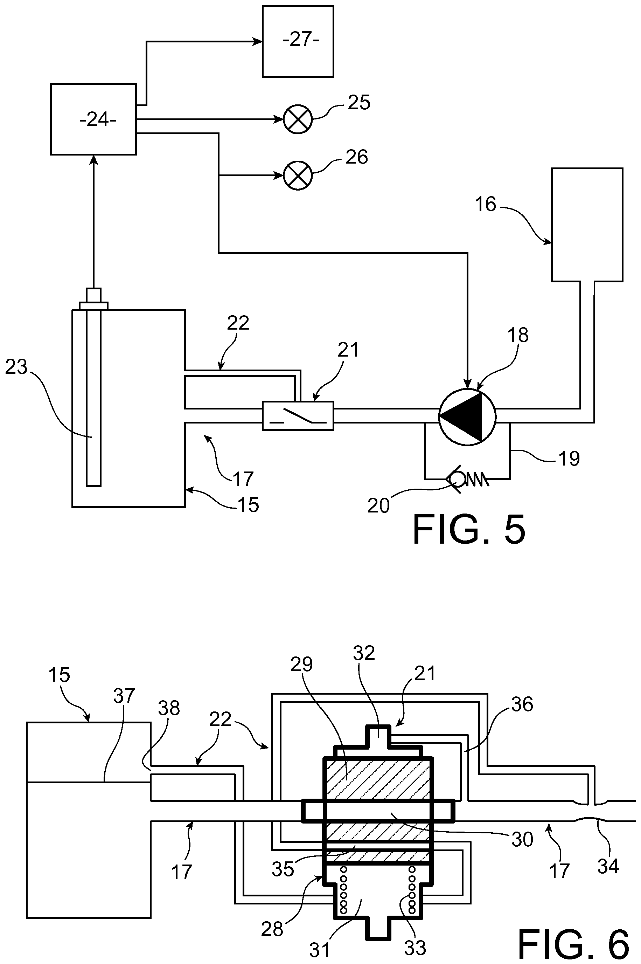

Le dispositif représenté à la figure 5 comprend un réservoir de moteur 15, un réservoir d'avion 16, un conduit d'alimentation 17 unissant les réservoirs 15 et 16, une pompe 18 placée sur le conduit d'alimentation 17 et agencée de manière à pouvoir forcer un écoulement d'huile du réservoir d'avion 16 au réservoir de moteur 15, une dérivation 19 du conduit d'alimentation 17 contournant la pompe 18 et permettant des recirculations exclusivement vers le réservoir d'avion 16 autour de la pompe 18, grâce à un clapet anti-retour 20 qui est placé sur elle. Le dispositif comprend encore : une vanne d'arrêt 21 située sur le conduit d'alimentation 17 entre la pompe 18 et la dérivation 19 d'une part, le réservoir de moteur 15 d'autre part ; un conduit d'air 22 se branchant au réservoir de moteur 15 au-dessus du niveau auquel le conduit d'alimentation 17 se branche, et passant par la vanne d'arrêt 21 pour la commander, comme on le verra plus tard ; une sonde 23 à l'intérieur du réservoir de moteur 15, destinée à mesurer le niveau d'huile à l'intérieur de celui-ci, et pouvant être du genre comprenant un flotteur magnétique, comme il est décrit au début de cette description ; une électronique de traitement 24 apte à interpréter les indications de la sonde 23, à indiquer un volume d'huile à délivrer pour le remplissage, et éventuellement à couper le fonctionnement de la pompe 18, et dans laquelle on retrouve donc notamment les fonctions de l'unité d'acquisition 3, de l'unité de demande de correction 4, et du système d'alimentation 5 décrits dans la réalisation connue ; un indicateur de de remplissage 25 et un indicateur de sur-remplissage 26, allumés par l'électronique de traitement 24 quand un seuil de remplissage nominal et un seuil de sur-remplissage, tous deux mesurés par la sonde 23, sont respectivement atteints; et un afficheur 27 de quantité d'huile à délivrer au réservoir de moteur 15, lui aussi renseigné par l'électronique de traitement 24 d'après les indications de la sonde 23. L'électronique de traitement 24, les indicateurs 25 et 26, et l'afficheur 27 composent un module de traitement.

La figure 6 illustre plus en détail la vanne d'arrêt 21. Elle comporte une fourrure 28 cylindrique dans laquelle coulisse un tiroir 29 traversé par une portion 30 du conduit d'alimentation 17 et apte à la déplacer. La portion 30 est en continuité avec le reste du conduit d'alimentation 17, qui est donc libre, à l'état de la figure 6. Les extrémités de la fourrure 28 sont occupées respectivement par une première chambre de commande 31 et une seconde chambre de commande 32, donnant sur les extrémités opposées du tiroir 29 pour le déplacer par pression de fluide dans un sens ou l'autre. Un ressort 33 est disposé dans la première chambre de commande 31 et tend à repousser le tiroir 29 dans la position de la figure 6, où le conduit d'alimentation 17 est ouvert. Le conduit d'air 22 traverse deux fois la vanne d'arrêt 21, d'abord en passant par la chambre de commande 31, puis par le tiroir 29. Son extrémité opposée au réservoir de moteur 15 débouche dans le conduit d'alimentation 17, à un venturi 34 de celui-ci, entre la vanne d'arrêt 21 et la pompe 18. Le conduit d'air 22 est ouvert à l'état de la figure 6. Une portion 35 du conduit d'air 22 est formée par un canal traversant le tiroir 29, et est en continuité avec le reste du conduit d'air quand celui-ci est à l'état ouvert, c'est-à-dire quand la vanne d'arrêt 21 est ouverte. Et un conduit de prise de pression 36 raccorde la seconde chambre de commande 32 au conduit d'alimentation 17 entre la vanne d'arrêt 21 et la pompe 18.

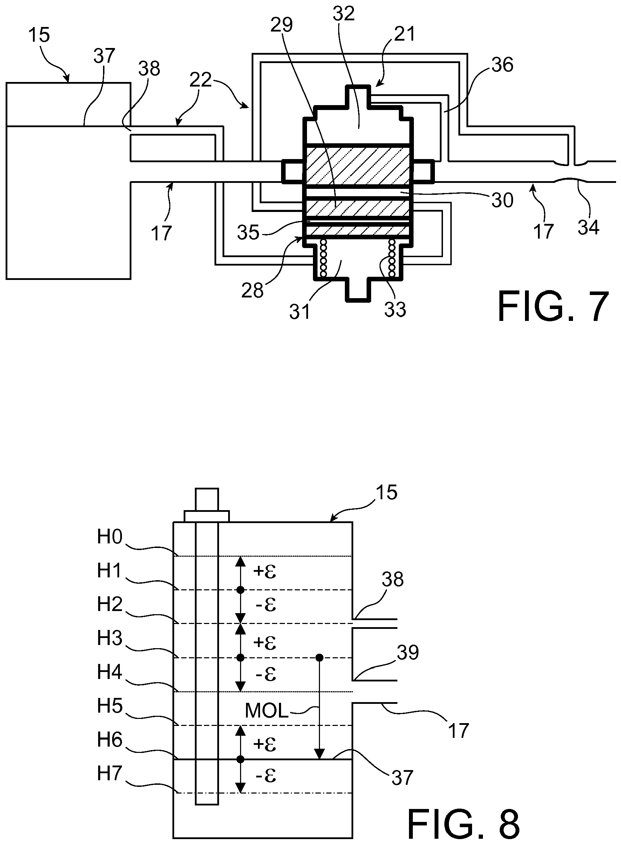

La figure 7 illustre l'autre état de la vanne 21 d'arrêt : le tiroir 19 est déplacé en restreignant la première chambre de commande 31 et en vainquant l'action du ressort 33, de sorte que les portions 30 et 35 du conduit d'alimentation 17 et du conduit d'air 22 qui traversent le tiroir 29 sont déplacées et ne sont plus en continuité avec le reste, ce qui obture ces conduits 17 et 22. Cet état est atteint quand le niveau d'huile 37 dans le réservoir de moteur 15 atteint ou dépasse le débouché 38 du conduit d'air 22 dans le réservoir de moteur 15, et obture donc ce conduit, pour la raison qu'on détaillera plus tard. Si alors la pompe 18 travaille, l'huile pompée est soumise à une recirculation par la dérivation 19, le clapet anti-retour 20 s'ouvrant. Quand la vanne d'arrêt 21 est ouverte et que la pompe 18 fonctionne, aucune recirculation ne se produit, le clapet anti-retour 20 étant taré à une force suffisante pour rester à cet état fermé de la vanne d'arrêt 21 malgré la différence de pression qui règne alors entre les deux côtés de la pompe 18 : toute l'huile pompée parvient au réservoir de moteur 15.

On passe au commentaire de la figure 8. Le réservoir de moteur 15 devrait être rempli jusqu'à un niveau H₂ correspondant à un remplissage optimal. La quantité d'huile à délivrer est traditionnellement décidée d'après une mesure du niveau 37 par la sonde 23, mais ses incertitudes expliquent qu'on perfectionne ici les dispositifs connus. Le débouché 38 du conduit d'air 22 est au niveau H₂ de remplissage optimal. Comme la vanne d'arrêt 21 se ferme et interrompt l'alimentation d'huile en imposant la recirculation autour de la pompe 18 dès que l'huile atteint ce niveau, la vanne d'arrêt 21 combinée au conduit d'air 22 permettrait donc à elle seule d'obtenir un remplissage optimal du réservoir de moteur 15. Mais comme elle peut aussi être sujette à des pannes et des défaillances, son bon fonctionnement doit donc être vérifié pour s'assurer de la qualité du remplissage. Le dispositif exploite une combinaison de la sonde 23 avec la vanne d'arrêt 21 pour cela, avec un procédé de remplissage qu'on va décrire. Les indicateurs 25, 26 et, le cas échéant, l'afficheur 27, indiqueront le succès ou l'échec du remplissage. L'indicateur de remplissage nominal 25, et l'indicateur de sur-remplissage 26 s'allument respectivement quand un niveau de remplissage nominal H₃ et un niveau de sur-remplissage H₁ atteints par l'huile sont mesurés (avec ses incertitudes) par la sonde 23.

On préconise que les niveaux de remplissage nominal H₃ et de sur-remplissage H₁ soient respectivement à une altitude plus basse et plus élevée que le niveau de remplissage optimal H₂ d'une quantité ε (H₃ = H₂ - ε, et H₁ = H₂ + ε), où ε est une valeur absolue d'une incertitude de mesure attribuée à la sonde 23, ainsi qu'on l'a mentionné. L'incertitude ± ε ou - ε de mesure considérée ici est une incertitude jugée normale ; l'incertitude réelle de la sonde 23 peut être plus grande en pratique, et cette situation sera examinée plus loin pour indiquer que l'invention permet de la détecter.

Le débouché 39 du conduit d'alimentation 17 dans le réservoir de moteur 15 est ici à un niveau H₄ = H₂ - 2ε, sans que ce soit nécessaire.

Quand un remplissage est décidé, une mesure du niveau d'huile 37, à un niveau H₆ à cet instant, est faite par la sonde 23. La quantité d'huile nécessaire pour remplir le réservoir de moteur 15 jusqu'au niveau de remplissage optimal H₂ ne peut toutefois pas être évaluée avec précision, à cause de l'incertitude de mesure ± ε attribuée à la sonde 23, qui fait que le niveau réel de l'huile pour donner la mesure à H₆ peut être compris entre les niveaux H₅ = H₆ + ε et H₇ = H₆ - ε. Pour atteindre avec certitude le niveau de remplissage optimal H₂, il faudra donc injecter dans le réservoir du moteur 15 une quantité d'huile correspondant à une élévation de niveau égal à (MOL + ε + ε), où MOL (« Missing oil level ») correspond à la dénivellement entre H₆ et H₃, et à la hauteur du volume d'huile à délivrer dans le réservoir de moteur 15 (en supposant une mesure parfaite de la sonde 23) pour atteindre le niveau de remplissage nominal H₃ et forcer l'allumage de l'indication de remplissage 25, et ε correspond d'abord à une majoration nécessaire pour atteindre le niveau de remplissage optimal H₂ (puisque H₂ - H₃ = ε), puis une autre majoration pour tenir compte de l'incertitude de mesure de la sonde 23, si le niveau réel d'huile est à H₇ (H₆ - ε). Cette façon de procéder fait que la sonde 23 mesure que le réservoir est rempli au-dessus du niveau de remplissage maximal H3, même si le niveau d'huile initial est à H7, le remplissage le faisant passer de H4 quand la quantité correspondant à la dénivellation MOL a été injectée, puis à H3 quand la quantité correspondant à la dénivellation (MOL+ ε ) a été injectée, et enfin à H2 quand la quantité correspondant à la dénivellation (MOL+2ε) a été ajoutée, se révélera néanmoins défectueuse en cas de défaillance de fermeture de la vanne d'arrêt 21, car, sauf dans la situation extrême où le niveau d'huile initial est à H₇, c'est-à-dire à la limite inférieure possible d'après l'incertitude ± ε supposée pour les mesures de la sonde 23, le niveau d'huile s'élèvera au-dessus du niveau de remplissage optimal H₂ et donnera un sur-remplissage qui ne sera pas forcément détecté. Un perfectionnement du procédé consiste alors à délivrer un volume d'huile supplémentaire pour forcer un sur-remplissage suffisant pour allumer l'indicateur 26 correspondant, dans le cas où la vanne d'arrêt 21 ne se fermerait pas. Ce volume d'huile supplémentaire correspond à une dénivellation de 2ε pour atteindre le niveau Hₒ, correspondant à la hauteur H₁ + ε et à la limite supérieure du niveau de détection de sur-remplissage, encore d'après l'incertitude de mesure ± ε de la sonde 23, et correspondant aussi, dans cette réalisation, à (H₂ + 2ε). Dans cette réalisation de procédé particulièrement préconisée pour l'invention, on injectera donc une quantité d'huile qui correspondrait à une élévation du niveau d'huile de la dénivellation égale à (MOL + 4ε) dans le réservoir d'avion 15, si elle était entièrement délivrée par le dispositif (ce que ne permet pas obligatoirement la vanne d'arrêt 21).

Dans le cas d'une alimentation par impulsions, la quantité à délivrer pourra donc être convertie en nombre d'impulsions à donner par un opérateur, qu'il lira sur l'afficheur 27, et l'électronique de traitement 24 arrêtera la pompe 18 à la fin de chaque impulsion, ou dès que le remplissage sera achevé. Le début de chaque impulsion sera déclenché par l'opérateur appuyant sur un bouton, et les impulsions auront une durée fixe. La quantité d'huile qu'elles délivreront est définie par les caractéristiques mécaniques et dimensionnelles du dispositif, notamment par le débit de la pompe 18. Le nombre d'impulsions X à donner, signalé par l'afficheur 27, décroît dès que l'une d'elles est finie. Ce nombre peut représenter la quantité majorée, effectivement délivrée d'après le procédé (préférentiellement (MOL + 4ε) pour diagnostiquer une défaillance de la vanne d'arrêt 21, comme on l'a vu), ou une quantité nominale pour le remplissage (MOL par exemple), et la majoration de la quantité est alors délivrée automatiquement, par une temporisation de durée déterminée, pendant laquelle le fonctionnement de la pompe 28 est prolongé avant qu'il ne soit coupé.

La fourniture de l'huile peut aussi être commandée par l'opérateur. Trois modes sont particulièrement envisagés :
- manuel par l'opérateur qui fait le bon nombre d'impulsions sur un bouton pour injecter une quantité équivalente à MOL+4ε ;
- temporisation de durée T, type 1 : l'opérateur appuie sur le bouton, ce qui déclenche le système de remplissage et la temporisation. Quand le niveau d'huile arrive à H2, la vanne 21 coupe l'arrivée d'huile. Quand la temporisation T est terminée, elle coupe le système de remplissage. La durée T doit être supérieure au temps pour remplir de MOL+4ε ;
- temporisation de durée T, type 2 : l'opérateur appuie sur le bouton, ce qui déclenche le système de remplissage. Quand le niveau d'huile est détecté à H3 par la sonde 23, la temporisation est lancée. La durée T est calculée pour remplir de plus que 4ε. Quand le niveau d'huile arrive à H2, la vanne 21 coupe l'arrivée d'huile. Quand la temporisation est terminée, la pompe 18 est coupée. Dans tous les cas, l'afficheur 27 indiquera la fin du procédé de remplissage. Les défaillances éventuelles pourront alors être observées grâce à l'état des indicateurs 25 et 26.

Examinons maintenant la situation produite par certaines défaillances possibles du dispositif.

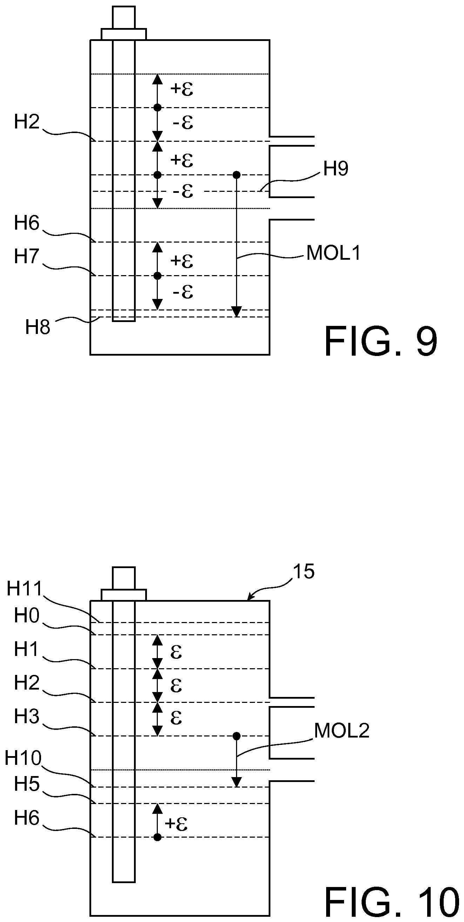

La figure 9 illustre une situation où la sonde 23 sous-estime tous les niveaux d'huile réels d'une quantité qui dépasse l'incertitude ± ε admise. Le niveau d'huile réel, à H₆, est alors mesuré au niveau H₈ (au-dessous de H₇), ce qui conduit à une surestimation du volume à délivrer, soit (MOL 1 + 4ε) en appliquant le principe de fonctionnement précédent. MOL 1 est défini comme MOL à la figure 8, c'est-à-dire la dénivellation entre H₂ et H₈, ou la hauteur du volume d'huile à délivrer pour obtenir l'allumage de l'indicateur de remplissage nominal 25 en supposant parfaites les mesures de la sonde 23. Quand ce volume est délivré, le remplissage est accompli au niveau optimal H₂, mais la sonde 23 indiquera un niveau de mesure H₉ (H₂ - H₉ = H₆ - H₈) inférieur au niveau H₃ de remplissage nominal, et aucun des indicateurs 25 et 26 ne sera allumé, même quand l'afficheur 27 aura indiqué la fin du remplissage. L'état incorrect de la sonde 23 sera alors dévoilé.

En cas inverse de surestimation des niveaux d'huile dans le réservoir de moteur 15 au-delà de l'incertitude ε, représenté par la figure 10, le niveau de mesure sera H₁₀ pour le niveau réel H₆, au-dessus de la limite supérieure admissible de mesure H₅, la quantité d'huile nominale à délivrer MOL 2 = (H₃ - H₁₀) sera sous-estimée. Cependant, en fournissant encore la majoration de volume correspondant à 4ε de hauteur, le niveau de l'huile montera jusqu'au niveau de remplissage optimal H₂ à la fin du processus, mais la surestimation de la mesure donnera un niveau de mesure H₁₁ (H₁₁ - H₂ = H₁₀ - H₆) au-dessus de Hₒ (qui, rappelons-le, correspond au seuil H1 de sur-remplissage majoré de l'incertitude ±ε admise par la sonde 23), ce qui fera que l'indicateur 26 s'allumera comme l'allumeur 25, puisque le niveau mesuré sera plus élevé que le niveau de sur-remplissage H₁. On obtiendra donc un état final où les deux indicateurs 25 et 26 seront allumés.

Enfin, en cas de défaillance de la vanne d'arrêt 21, l'alimentation du réservoir de moteur 15 se poursuivra au-delà du niveau de remplissage optimal H₂ et au-dessus du niveau de sur-remplissage H₁, au moins jusqu'au niveau Hₒ = H₁ + ε, ce qui donnera de même un état final où les deux indicateurs 25 et 26 seront allumés tant que les mesures par la sonde 23 restent dans les tolérances acceptées ± ε.

Pour résumer, un état satisfaisant du dispositif sera donné par un état final où l'indicateur de remplissage 25 et lui seul sera allumé, l'indicateur de sur-remplissage 26 reste éteint. Les autres états finaux révéleront une défaillance ou une panne d'un constituant de dispositif et imposeront un examen de ce dernier. Si l'état final comprend les deux indicateurs 25 et 26 allumés, un examen de la jauge visuelle du réservoir de moteur 15 permettra de déterminer si le niveau réel est au niveau de remplissage optimal H₂, ce qui signifiera une surestimation des mesures, ou s'il est plus haut que le niveau de sur remplissage H₁, ce qui signifiera une défaillance de la vanne d'arrêt 21. Dans ce dernier cas, le départ de l'avion sera permis seulement après un ajustement manuel du niveau d'huile. Dans les cas d'une défaillance de la sonde 23 par surestimation ou sous-estimation des mesures, le niveau de remplissage optimal H₂ étant tout de même atteint sans être dépassé, le départ de l'avion sera possible malgré les indications erronées de la sonde 23, mais en tenant compte de son incertitude excessive pendant le vol.

Le fonctionnement de la vanne d'arrêt 21 sera brièvement décrit. Elle est ouverte, le tiroir 29 étant à la position de la figure 6, quand le dispositif est au repos, puis pendant au moins le début du remplissage, tant que le niveau d'huile 37 n'a pas atteint le niveau de remplissage optimal H₂. La première chambre de commande 31 est à peu près à la pression du réservoir de moteur 15, et le ressort 33 maintient cet état. La pression dans la première chambre de commande 31 baisse légèrement quand la pompe 18 est active puisqu'une dépression est produite dans le venturi 34 et provoque une légère aspiration d'air, mais sans donc changer l'état général du dispositif, le tiroir 29 subissant un petit déplacement qui ne ferme ni le conduit d'alimentation 17 ni le conduit de prise d'air 22.

Mais quand le niveau d'huile atteint le niveau de remplissage optimal H₂, et que l'huile obture le débouché 38 du conduit d'air 22, la pression dans le conduit d'air 22 devient alors subitement proche de la pression dans le venturi 34, ce qui fait que la pression dans la seconde chambre de commande 32 devient nettement supérieure à celle de la première chambre 31, le tiroir 29 se déplace en comprimant le ressort 33, et les portions 30 et 35 du conduit d'alimentation 17 et du conduit d'air 22 qui le traversent et sont déplacées, et le conduit d'alimentation 17 ainsi que le conduit d'air 22 sont fermés. L'huile encore pompée ne parvient plus au réservoir de moteur 15. La pression dans la première chambre de commande 31, désormais isolée, reste à une valeur inférieure, insuffisante pour inverser cet état de fermeture de la figure 7. Quand toutefois la pompe 18 est coupée, la pression dans la seconde chambre de commande 32 diminue, une partie de son contenu en sort par le conduit 36 et le tiroir 29 revient à la position de la figure 6 sous l'action du ressort 33. La pompe 18 étant coupée, le niveau d'huile dans le réservoir de moteur 15 reste le même. La portion 39 du conduit d'air 22 est déplacée pour couper ce dernier, ce qui empêche l'huile d'y entrer par le venturi 34. Quand la vanne d'arrêt 21 se rouvrira, la pression dans le conduit d'air 22 redevenu continu purgera l'huile qui aurait tout de même pour y entrer en la rejetant dans le conduit d'alimentation 17.

D'autres modes de commande de la vanne d'arrêt 21 sont possibles. D'autres positions de hauteur des niveaux de remplissage nominal H₃ et de sur-remplissage H₁ par rapport au niveau de remplissage optimal H₂ peuvent aussi être proposées. Enfin, diverses variantes des moyens de commande et de contrôle sont possibles et seront décrits ci-après pour certaines.

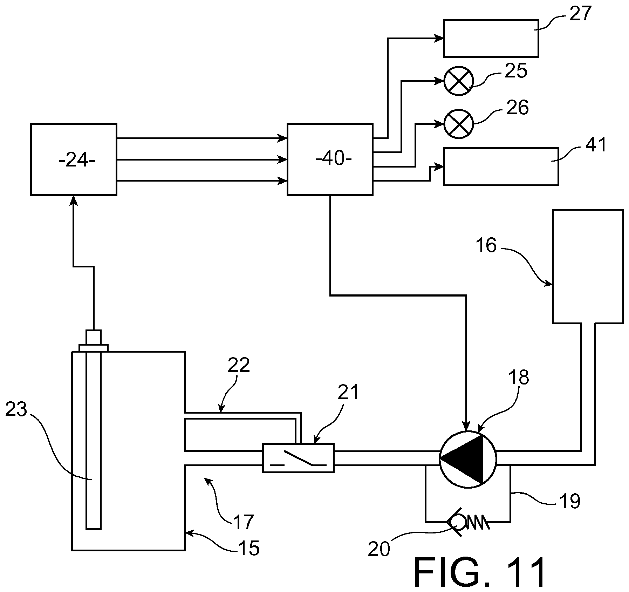

On se reporte ainsi à la figure 11. Le dispositif de la figure 5 est complété par un module électronique de commande du remplissage 40, recevant les signaux de sortie de l'électronique de traitement 24, émettant un signal de commande de la pompe 18 et les signaux transmis aux indicateurs 25 et 26, à l'afficheur 27, ainsi qu'à un afficheur de pannes 41.

Dans la conception de la figure 5, l'électronique de traitement 24 permettait seulement de couper le fonctionnement de la pompe 18, alors que l'information nécessaire à la commande de remplissage, comme le nombre d'impulsions de remplissage à donner, était indiquée à un opérateur par l'afficheur 27. Pour pallier le risque d'une inattention menant par exemple à une insuffisance d'impulsions données par l'opérateur, l'électronique de commande du remplissage 40 donne elle-même les indications de nombre d'impulsions, ou plus généralement de volume d'huile à délivrer au réservoir de moteur 15, à la pompe 18. Le procédé de remplissage peut par ailleurs être le même que précédemment, avec notamment la même quantité d'huile à fournir, associée par exemple à la dénivellation (MOL + 4ε). Les diagnostics de panne ou de défaillance seront aussi identiques à ceux de la réalisation précédente. Toutefois, l'afficheur de pannes 41 pourra indiquer l'existence d'une défaillance ou d'une panne, éventuellement sa nature si elle peut être identifiée, indiquer aussi que le niveau réel de remplissage du réservoir de moteur 15 est inconnu, et suggérer des mesures à prendre.

L'avantage de ce mode de réalisation est donc que le remplissage pourra être complètement automatisé, après qu'il aura été engagé par l'opérateur au moyen d'une commande unique. Il peut toutefois être prévu d'inhiber le fonctionnement de l'électronique de commande du remplissage 40, si par exemple un remplissage incomplet du réservoir de moteur 15 est souhaité pour une raison ou pour une autre. Un dispositif de commande manuel de remplissage d'un genre connu, mais normalement inactif dans cette réalisation, serait alors ajouté pour servir seulement dans ces situations exceptionnelles.

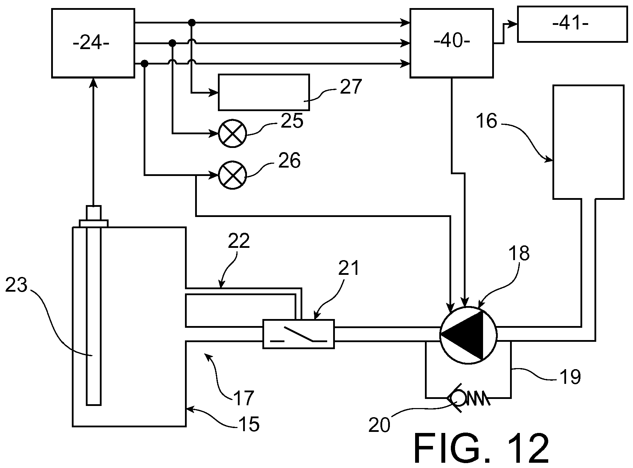

La figure 12 illustre une variante de réalisation, dans laquelle le module de traitement 24 reste chargé de l'allumage des indicateurs 25 et 26 et de l'afficheur 27, l'électronique de commande 40 régissant seulement la pompe 18 et l'afficheur de pannes 41.

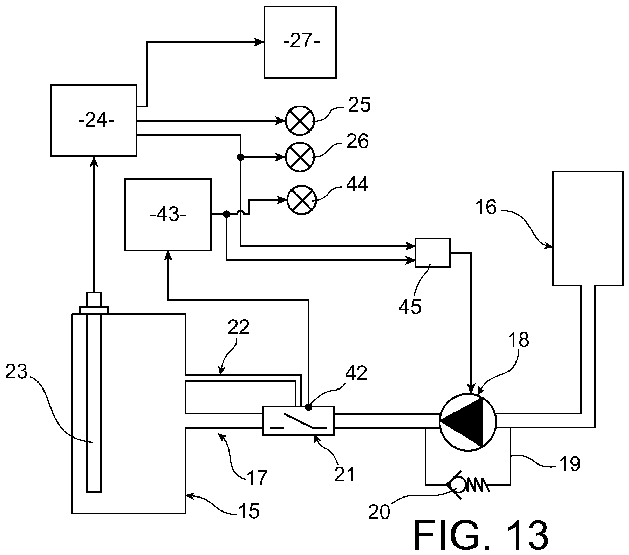

Un autre mode de réalisation est décrit au moyen de la figure 13. Il diffère de celui de la figure 5 en ce qu'il est ajouté un capteur de coupure 42 de la vanne d'arrêt 21, une électronique du traitement du capteur 43, et un indicateur de coupure mécanique 44. Ce dernier est renseigné par l'électronique de traitement du capteur 43, qui peut aussi, concurremment à l'électronique de traitement 24, commander la coupure de la pompe 18 par un dispositif logique « OU » 45 pour abréger les recirculations d'huile. Le capteur de coupure 42 peut être tout dispositif, électromagnétique ou autre, apte à mesurer ou indiquer la position du tiroir 29 dans la fourrure 28 et distinguer donc l'ouverture ou la fermeture de la vanne d'arrêt 21.

Certaines pannes ou défaillances n'étaient pas bien prises en compte par les réalisations précédentes, en particulier des insuffisances de fourniture d'huile à cause d'une défaillance de la pompe 18 ou de l'absence d'huile dans le réservoir d'avion 7. Il pourrait alors se produire, dans la pire des situations, un niveau d'huile 37 stabilisé entre le seuil de remplissage nominal H₃ et le niveau de remplissage optimal H₂, donc en réalité le réservoir d'avion 15 incomplètement empli, mais avec le voyant de remplissage 25 seul allumé (à cause de la précision ±ε de la sonde), ce qui signifierait donc, avec les réalisations précédentes, que le remplissage s'est achevé avec succès. Si en outre la sonde 23 était défaillante et surestimait le niveau d'huile, celui-ci pourrait en réalité se trouver même au-dessous du niveau de remplissage nominal H₃.

Comme la vanne d'arrêt 21 se ferme seulement quand le niveau d'huile a atteint le débouché 38 du conduit d'air 22, l'indication de fermeture de la vanne d'arrêt 21, fournie par le capteur de coupure 42, permet de confirmer le bon remplissage du réservoir de moteur 15, à condition certes que la vanne d'arrêt 21 fonctionne convenablement, ce qui peut être vérifié comme précédemment, si l'indicateur de remplissage nominal 25 est seul allumé à la fin du procédé de remplissage. L'indication contraire que la vanne d'arrêt 21 reste ouverte à la fin du remplissage indiquerait au contraire une défaillance de celle-ci ou de la sonde 23.

L'indication de commutation du tiroir 29 de l'état ouvert à l'état fermé, fournie par le capteur de coupure 42, permet aussi de commander immédiatement l'arrêt de la pompe 18 indépendamment de la durée de remplissage qui était encore prévue. Plus généralement, le capteur de coupure 42 mécanique permet des détections de pannes ou de défaillances plus nombreuses et plus fiables, avec éventuellement des redondances avec les moyens déjà décrits.

## Revendications

1. Dispositif de remplissage d'un réservoir d'huile d'un moteur d'aéronef, comprenant un conduit d'alimentation (17) menant au réservoir (15) du moteur et alimenté en huile par un autre réservoir (16) disposé dans l'aéronef à distance du moteur, une pompe (18) placée sur le conduit d'alimentation, un module de traitement (24, 25, 26, 27) de remplissage, relié à une sonde (23) d'un niveau d'huile dans le réservoir (15) et donnant des indications de hauteur dudit niveau d'huile (37), **caractérisé en ce que** le conduit d'alimentation (17) comprend une vanne d'arrêt (21) de remplissage située entre la pompe et le réservoir (15), le dispositif de remplissage comprend un dispositif (22, 33, 29) de fermeture de la vanne d'arrêt, indépendant de la sonde et du module de traitement, sensible à une élévation de l'huile à un niveau de remplissage optimal du réservoir, et le module de traitement comprend un indicateur de sur-remplissage (26) du réservoir et un indicateur de remplissage nominal (25) du réservoir, lesdits indicateurs étant commandés quand l'huile atteint respectivement un niveau de sur-remplissage (H1) au-dessus du niveau de remplissage optimal (H2) et un niveau de remplissage nominal (H3) au-dessous du niveau de remplissage optimal (H2), et le niveau de remplissage optimal (H2) est distant du niveau de remplissage nominal (H3) et du niveau de sur-remplissage (H1) de dénivellations correspondant toutes deux à une incertitude de mesure (- ε, + ε) attribuée à la sonde (23).

2. Dispositif de remplissage d'un réservoir d'huile selon la revendication 1, **caractérisé en ce que** la sonde de niveau d'huile comporte un flotteur magnétique et des interrupteurs électriques étagés à des hauteurs différentes du réservoir.

3. Dispositif de remplissage d'un réservoir d'huile selon la revendication 1 ou 2, **caractérisé en ce que** le dispositif de traitement comprend un afficheur (27) de quantité d'huile à fournir au réservoir, d'après des mesures de la sonde.

4. Dispositif de remplissage d'un réservoir d'huile selon l'une quelconque des revendications 1 à 3, **caractérisé en ce que** le dispositif de fermeture (22, 33, 29) de la vanne d'arrêt (21) comprend un conduit d'air (22) se branchant au réservoir par un orifice de débouché (38) obturable par l'huile et, à une extrémité opposée, se branchant à une prise de pression inférieure à une pression dans le réservoir (15), le conduit d'air (22) passant par une première chambre de commande (31) de la vanne d'arrêt, et la vanne d'arrêt contient un obturateur (29) du conduit d'alimentation (17), déplacé par une pression dans la première chambre de commande (31) entre une position d'ouverture du conduit d'alimentation quand la pression dans la première chambre de commande est exposée à la pression dans le réservoir et une position de fermeture du conduit d'alimentation quand la pression dans la première chambre de commande est exposée seulement à ladite pression inférieure.

5. Dispositif de remplissage d'un réservoir d'huile selon la revendication 4, **caractérisé en ce que** ladite extrémité opposée du conduit d'air (22) se branche à une portion en venturi (34) du conduit d'alimentation (17) située entre la pompe (18) et la vanne d'arrêt (21).

6. Dispositif de remplissage d'un réservoir d'huile selon la revendication 4 ou 5, **caractérisé en ce que** le conduit d'air (22) passe aussi par l'obturateur (29) de la vanne d'arrêt, et est coupé par l'obturateur quand celui-ci est à la position de fermeture.

7. Dispositif de remplissage d'huile selon l'une quelconque des revendications 4 à 6, **caractérisé en ce que** la vanne d'arrêt comprend un ressort (33) rappelant l'obturateur (29) à la position d'ouverture.

8. Dispositif de remplissage d'un réservoir d'huile selon l'une quelconque des revendications 4 à 7, **caractérisé en ce que** la vanne d'arrêt comprend une seconde chambre de commande (32), opposée à ladite première chambre de commande (31) par rapport à l'obturateur, et reliée au conduit d'alimentation (17) entre la pompe et la vanne d'arrêt par un conduit de prise de pression (36).

9. Dispositif de remplissage d'un réservoir d'huile selon l'une quelconque des revendications 1 à 8, **caractérisé en ce que** le conduit d'alimentation comprend une dérivation (19) autour de la pompe (18) équipée d'un clapet (20) autorisant seulement une circulation inverse, vers l'autre réservoir (16), à une circulation d'alimentation produite par la pompe.

10. Dispositif de remplissage d'un réservoir d'huile selon l'une quelconque des revendications 1 à 9, **caractérisé en ce qu'**il comprend un module de commande (40) automatique de la pompe (18) d'après des indications du module de traitement (24).

11. Dispositif de remplissage d'un réservoir d'huile selon l'une quelconque des revendications 1 à 10, **caractérisé en ce qu'**il comprend un capteur (42) détectant des fermetures de la vanne d'arrêt (21) et un indicateur (44) desdites fermetures détectées par le capteur.

12. Dispositif de remplissage d'un réservoir d'huile selon la revendication 11, **caractérisé en ce qu'**il comprend un module de traitement du capteur (43), renseigné par le capteur (42) pour arrêter la pompe (18) quand les fermetures de la vanne d'arrêt (21) ont été détectées.

13. Procédé de remplissage d'un réservoir d'huile équipé d'un dispositif de remplissage selon l'une quelconque des revendications précédentes, consistant à déterminer une quantité d'huile à délivrer au réservoir d'après une mesure de niveau d'huile initial donnée par la sonde (23), et à délivrer ladite quantité, **caractérisé en ce qu'**il comprend une vérification du remplissage et du dispositif, faite d'après les indicateurs (25, 26).

14. Procédé de remplissage d'un réservoir d'huile selon la revendication 13, **caractérisé en ce que** ladite vérification est faite exclusivement d'après des moyens visuels de vérification (25, 26, 27), comprenant lesdits indicateurs (25, 26), appartenant au dispositif.

15. Procédé de remplissage d'huile selon la revendication 13 ou 14, **caractérisé en ce que** la quantité d'huile à délivrer correspond à une quantité évaluée pour atteindre avec certitude le niveau de remplissage optimal (H2), et comprenant une quantité théoriquement nécessaire pour atteindre ledit niveau de remplissage optimal (H2) à partir de la mesure de niveau d'huile initial, majorée d'une quantité fixe (2ε, 4ε) fonction d'une incertitude de mesure attribuée à la pompe.

16. Procédé de remplissage d'huile selon la revendication 15, **caractérisé en ce que** la quantité fixe correspond à un volume correspondant à une dénivellation de deux fois l'incertitude de mesure.

17. Procédé de remplissage d'huile selon la revendication 16, **caractérisé en ce que** la quantité fixe correspond à quatre fois l'incertitude de mesure.

18. Procédé de remplissage d'un réservoir d'huile selon la revendication 15 ou 16, **caractérisé en ce que** la quantité d'huile à délivrer correspond à une quantité évaluée pour atteindre avec certitude le niveau de sur-remplissage (H1).

19. Procédé de remplissage d'un réservoir d'huile selon l'une quelconque des revendications 15 à 18, **caractérisé en ce qu'**il comprend un arrêt automatique de la pompe quand soit la vanne d'arrêt (21) est détectée comme fermée, soit le niveau de sur-remplissage (H1) est atteint.

20. Aéronef, **caractérisé en ce qu'**il comprend au moins un dispositif selon l'une quelconque des revendications 1 à 12, dans lequel le réservoir d'huile (15) est un réservoir de moteur, et la conduite d'alimentation (17) est originaire d'un autre réservoir d'huile (16) présent dans une carlingue de l'aéronef.

## Patentansprüche

1. Vorrichtung zum Befüllen eines Ölreservoirs eines Flugzeugtriebwerks, umfassend eine Versorgungsleitung (17), die zum Reservoir (15) des Triebwerks führt und von einem anderen Reservoir (16), das in dem Flugzeug beabstandet von dem Triebwerk angeordnet ist, mit Öl versorgt wird, eine Pumpe (18), die auf der Versorgungsleitung angebracht ist, ein Verarbeitungsmodul (24, 25, 26, 27) zur Befüllung, das mit einer Sonde (23) für einen Ölstand in dem Reservoir (15) verbunden ist und Angaben zur Höhe des Ölstands (37) liefert, **dadurch gekennzeichnet, dass** die Versorgungsleitung (17) ein Absperrventil (21) zur Befüllung umfasst, das sich zwischen der Pumpe und dem Reservoir (15) befindet, die Vorrichtung zum Befüllen eine Vorrichtung (22, 33, 29) zum Schließen des Absperrventils umfasst, unabhängig von der Sonde und dem Verarbeitungsmodul, die auf eine Erhöhung des Öls auf einen optimalen Füllstand des Reservoirs reagiert, und das Verarbeitungsmodul eine Überfüllanzeige (26) des Reservoirs und eine Sollfüllanzeige (25) des Reservoirs umfasst, wobei die Anzeigen angesteuert werden, wenn das Öl jeweils einen Überfüllstand (H1) über dem optimalen Füllstand (H2) und einen Sollfüllstand (H3) unter dem optimalen Füllstand (H2) erreicht, und der optimale Füllstand (H2) von dem Sollfüllstand (H3) und dem Überfüllstand (H1) um Höhenunterschiede entfernt ist, die beide einer Messunsicherheit (-ε, +ε) entsprechen, die der Sonde (23) zugeordnet ist.

2. Vorrichtung zum Befüllen eines Ölreservoirs nach Anspruch 1, **dadurch gekennzeichnet, dass** die Sonde für den Ölstand einen magnetischen Schwimmer und elektrische Schalter umfasst, die mehrstufig in unterschiedlichen Höhen des Reservoirs angeordnet sind.

3. Vorrichtung zum Befüllen eines Ölreservoirs nach Anspruch 1 oder 2, **dadurch gekennzeichnet, dass** die Verarbeitungsvorrichtung eine Anzeige (27) für die Ölmenge umfasst, die dem Reservoir nach Messungen der Sonde zuzuführen ist.

4. Vorrichtung zum Befüllen eines Ölreservoirs nach irgendeinem der Ansprüche 1 bis 3, **dadurch gekennzeichnet, dass** die Vorrichtung zum Schließen (22, 33, 29) des Absperrventils (21) einen Luftkanal (22) umfasst, der an das Reservoir durch eine Ablauföffnung (38) angeschlossen ist, die durch Öl verschließbar ist, und an einem gegenüberliegenden Ende an einen Messpunkt eines Drucks angeschlossen ist, der niedriger ist als ein Druck in dem Reservoir (15), wobei der Luftkanal (22) durch eine erste Steuerkammer (31) des Absperrventils verläuft, und das Absperrventil einen Verschluss (29) der Versorgungsleitung (17) enthält, der durch einen Druck in der ersten Steuerkammer (31) zwischen einer Öffnungsposition der Versorgungsleitung, wenn der Druck in der ersten Steuerkammer dem Druck in dem Reservoir ausgesetzt ist, und einer Schließposition der Versorgungsleitung, wenn der Druck in der ersten Steuerkammer nur dem niedrigeren Druck ausgesetzt ist, verschoben wird.

5. Vorrichtung zum Befüllen eines Ölreservoirs nach Anspruch 4, **dadurch gekennzeichnet, dass** das gegenüberliegende Ende des Luftkanals (22) an einen Venturi-Abschnitt (34) der Versorgungsleitung (17) angeschlossen wird, der sich zwischen der Pumpe (18) und dem Absperrventil (21) befindet.

6. Vorrichtung zum Befüllen eines Ölreservoirs nach Anspruch 4 oder 5, **dadurch gekennzeichnet, dass** der Luftkanal (22) auch durch den Verschluss (29) des Absperrventils verläuft und von dem Verschluss abgesperrt wird, wenn sich dieser in der Schließposition befindet.

7. Vorrichtung zum Befüllen eines Ölreservoirs nach irgendeinem der Ansprüche 4 bis 6, **dadurch gekennzeichnet, dass** das Absperrventil eine Feder (33) umfasst, die den Verschluss (29) in die Öffnungsposition zurückstellt.

8. Vorrichtung zum Befüllen eines Ölreservoirs nach irgendeinem der Ansprüche 4 bis 7, **dadurch gekennzeichnet, dass** das Absperrventil eine zweite Steuerkammer (32) umfasst, die in Bezug auf den Verschluss der ersten Steuerkammer (31) gegenüberliegend angeordnet ist und mit der Versorgungsleitung (17) zwischen der Pumpe und dem Absperrventil durch eine Druckmessleitung (36) verbunden ist.

9. Vorrichtung zum Befüllen eines Ölreservoirs nach irgendeinem der Ansprüche 1 bis 8, **dadurch gekennzeichnet, dass** die Versorgungsleitung einen Bypass (19) um die Pumpe (18) herum umfasst, der mit einem Ventil (20) ausgestattet ist, das nur einen Umlauf zum anderen Reservoir (16), entgegen einem Versorgungsumlauf zulässt, der von der Pumpe erzeugt wird.

10. Vorrichtung zum Befüllen eines Ölreservoirs nach irgendeinem der Ansprüche 1 bis 9, **dadurch gekennzeichnet, dass** sie ein Modul zum automatischen Steuern (40) der Pumpe (18) gemäß Angaben des Verarbeitungsmoduls (24) umfasst.

11. Vorrichtung zum Befüllen eines Ölreservoirs nach irgendeinem der Ansprüche 1 bis 10, **dadurch gekennzeichnet, dass** sie einen Sensor (42) umfasst, der Schließungen des Absperrventils (21) erfasst, und einen Indikator (44) der von dem Sensor erfassten Schließungen.

12. Vorrichtung zum Befüllen eines Ölreservoirs nach Anspruch 11, **dadurch gekennzeichnet, dass** sie ein Sensorverarbeitungsmodul (43) umfasst, das von dem Sensor (42) informiert wird, um die Pumpe (18) auszuschalten, wenn die Schließungen des Absperrventils (21) erfasst wurden.

13. Verfahren zum Befüllen eines Ölreservoirs, das mit einer Vorrichtung zum Befüllen nach irgendeinem der vorstehenden Ansprüche ausgestattet ist, bestehend im Bestimmen einer Ölmenge, die dem Reservoir gemäß einer Messung des Ausgangsölstands, die von der Sonde (23) geliefert wird, zuzuführen ist, und im Abgeben dieser Menge, **dadurch gekennzeichnet, dass** es eine Überprüfung der Befüllung und der Vorrichtung umfasst, die gemäß den Anzeigen (25, 26) erfolgt.

14. Verfahren zum Befüllen eines Ölreservoirs nach Anspruch 13, **dadurch gekennzeichnet, dass** die Überprüfung ausschließlich gemäß optischen Überprüfungsmitteln (25, 26, 27) erfolgt, umfassend die Anzeigen (25, 26), die zu der Vorrichtung gehören.

15. Verfahren zum Befüllen mit Öl nach Anspruch 13 oder 14, **dadurch gekennzeichnet, dass** die abzugebende Ölmenge einer evaluierten Menge entspricht, um den optimalen Füllstand (H2) mit Sicherheit zu erreichen, und umfassend eine theoretisch notwendige Menge, um den optimalen Füllstand (H2) zu erreichen, ausgehend von der Messung des Ausgangsölstands, erhöht um eine feste Menge (2ε, 4ε) in Abhängigkeit von einer Messunsicherheit, die der Pumpe zugeordnet ist.

16. Verfahren zum Befüllen mit Öl nach Anspruch 15, **dadurch gekennzeichnet, dass** die feste Menge einem Volumen entspricht, das einem Höhenunterschied von der zweifachen Messunsicherheit entspricht.

17. Verfahren zum Befüllen mit Öl nach Anspruch 16, **dadurch gekennzeichnet, dass** die feste Menge der vierfachen Messunsicherheit entspricht.

18. Verfahren zum Befüllen eines Ölreservoirs nach Anspruch 15 oder 16, **dadurch gekennzeichnet, dass** die abzugebende Ölmenge einer evaluierten Menge entspricht, um den Überfüllstand (H1) mit Sicherheit zu erreichen.

19. Verfahren zum Befüllen eines Ölreservoirs nach irgendeinem der Ansprüche 15 bis 18, **dadurch gekennzeichnet, dass** es eine automatische Abschaltung der Pumpe umfasst, wenn entweder das Absperrventil (21) als geschlossen erfasst wird oder der Überfüllstand (H1) erreicht wird.

20. Flugzeug, **dadurch gekennzeichnet, dass** es wenigstens eine Vorrichtung nach irgendeinem der Ansprüche 1 bis 12 umfasst, wobei das Ölreservoir (15) ein Triebwerkreservoir ist und die Versorgungsleitung (17) von einem anderen Ölreservoir (16) stammt, das in einem Rumpf des Flugzeugs vorhanden ist.

## Claims

1. A device for filling an oil tank of an aircraft engine, comprising a supply duct (17) leading to the tank (15) of the engine and supplied with oil by another tank (16) disposed in the aircraft at a distance from the engine, a pump (18) placed on the supply duct, a filling processing module (24, 25, 26, 27), connected to a probe (23) of an oil level in the tank (15) and giving height indications of said oil level (37), **characterised in that** the supply duct (17) comprises a filling shut-off valve (21) located between the pump and the tank (15), the filling device comprises a device (22, 33, 29) for closing the shut-off valve, independent of the probe and the processing module, sensitive to oil rising to an optimum fill level of the tank, and the processing module comprises a tank overfill indicator (26) and a tank nominal fill indicator (25), said indicators being controlled when the oil reaches an overfill level (H₁) above the optimum fill level (H₂) and a nominal fill level (H₃) below the optimum fill level (H₂), respectively, and the optimum fill level (H₂) is distant from the nominal fill level (H₃) and the overfill level (H₁) by differences in level both corresponding to a measurement uncertainty (- ε, + ε) ascribed to the probe (23).

2. The oil tank filling device according to claim 1, **characterised in that** the oil level probe comprises a magnetic float and electrical switches arranged in tiers at different heights of the tank.

3. The oil tank filling device according to claim 1 or 2, **characterised in that** the processing device comprises a display (27) for the amount of oil to be supplied to the tank, based on measurements of the probe.

4. The oil tank filling device according to any of claims 1 to 3, **characterised in that** the device (22, 33, 29) for closing the shut-off valve (21) comprises an air duct (22) connecting to the tank via an outlet port (38) which can be sealed with oil and, at an opposite end, connecting to an inlet with a pressure lower than a pressure in the tank (15), the air duct (22) passing through a first control chamber (31) of the shut-off valve, and the shut-off valve contains a shutter (29) of the supply duct (17), moved by a pressure in the first control chamber (31) between an opening position of the supply duct when the pressure in the first control chamber is exposed to the pressure in the tank and a closing position of the supply duct when the pressure in the first control chamber is exposed to only said lower pressure.

5. The oil tank filling device according to claim 4, **characterised in that** said opposite end of the air duct (22) connects to a venturi portion (34) of the supply duct (17) located between the pump (18) and the shut-off valve (21).

6. The oil tank filling device according to claim 4 or 5, **characterised in that** the air duct (22) also passes through the shutter (29) of the shut-off valve, and is cut off by the shutter when the latter is in the closing position.

7. The oil filling device according to any of claims 4 to 6, **characterised in that** the shut-off valve comprises a spring (33) returning the shutter (29) to the opening position.

8. The oil tank filling device according to any of claims 4 to 7, **characterised in that** the shut-off valve comprises a second control chamber (32), opposite to said first control chamber (31) with respect to the shutter, and connected to the supply duct (17) between the pump and the shut-off valve by a pressure inlet duct (36).

9. The oil tank filling device according to any of claims 1 to 8, **characterised in that** the supply duct comprises a bypass (19) around the pump (18) equipped with a flap valve (20) allowing only a reverse flow, towards the other tank (16), to a supply circulation produced by the pump.

10. The oil tank filling device according to any of claims 1 to 9, **characterised in that** it comprises a module (40) for automatically controlling the pump (18) based on indications from the processing module (24).

11. The oil tank filling device according to any of claims 1 to 10, **characterised in that** it comprises a sensor (42) detecting closures of the shut-off valve (21) and an indicator (44) of said closures detected by the sensor.

12. The oil tank filling device according to claim 11, **characterised in that** it comprises a sensor processing module (43), informed by the sensor (42) to shut off the pump (18) when closures of the shut-off valve (21) have been detected.

13. A method for filling an oil tank equipped with a filling device according to any of the preceding claims, consisting in determining an amount of oil to be delivered to the tank based on an initial oil level measurement given by the probe (23), and delivering said amount, **characterised in that** it comprises a check of the filling and of the device, made with the indicators (25, 26)

14. The method for filling an oil tank according to claim 13, **characterised in that** said checking is made exclusively based on visual check means (25, 26, 27), belonging to the device, comprising said indicators (25, 26).

15. The method for filling oil according to claim 13 or 14, **characterised in that** the amount of oil to be delivered corresponds to an amount evaluated to reach with certainty the optimum fill level (H₂), and comprising an amount theoretically necessary to reach said optimum fill level (H₂) from the initial oil level measurement, increased by a fixed amount (2ε, 4ε) being a function of a measurement uncertainty ascribed to the pump.

16. The method for filling oil according to claim 15, **characterised in that** the fixed amount corresponds to a volume corresponding to a difference in level of twice the measurement uncertainty.

17. The method for filling oil according to claim 16, **characterised in that** the fixed amount corresponds to four times the measurement uncertainty.

18. The method for filling an oil tank according to claim 15 or 16, **characterised in that** the amount of oil to be delivered corresponds to an amount evaluated to reach with certainty the overfill level (H₁).

19. The method for filling an oil tank according to any of claims 15 to 18, **characterised in that** it comprises automatically shutting off the pump when either the shut-off valve (21) is detected as closed or the overfill level (H₁) is reached.

20. An aircraft, **characterised in that** it comprises at least one device according to any of claims 1 to 12, wherein the oil tank (15) is an engine tank, and the supply duct (17) originates from another oil tank (16) present in a cabin of the aircraft.
